# EUROPÄISCHE PATENTANMELDUNG

(11) **EP 2 223 974 A1**
(43) Veröffentlichungstag der Anmeldung: **01.09.2010**
(21) Anmeldenummer: 09152942.0
(22) Anmeldetag: 16.02.2009
(51) Int. Cl.: C09C 3/06, C08K 9/02

(54) **Verfahren zur Herstellung von Zinkoxidpartikeln**

(71) Anmelder: Grillo Zinkoxid GmbH, 38644 Goslar (DE)
(72) Erfinder: Dr. Burkhardt Jahn, verstorben (DE); Schubert Peter, 38690 Vienenburg (DE); Dr. Rohe Bernd, 47445 Moers (DE); Heßdörfer Sven, 97753 Karlstadt (DE)
(74) Vertreter: von Kreisler Selting Werner

(57) **Zusammenfassung**

Verfahren zur Herstellung von Zinkoxidpartikeln, wobei das Zinkoxid in partikulärer Form als sogenannter Core-Shell-Partikel vorliegt, umfassend folgende Schritte:
• Zugabe eines Füllstoffes, eines alkalischen Feststoffes und/oder einer alkalischen Lösung und eines Zinksalzes oder einer Lösung eines Zinksalzes zu einem Lösungsmittel, insbesondere einem protisch polaren Lösungsmittel, wobei die Reihenfolge der Zugabe variabel ist;
• Abtrennung des entstehenden Niederschlages, ggf. Waschen des Niederschlages, insbesondere mit einem protisch polarem Lösungsmittel, vorzugsweise Wasser;
• Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

## Beschreibung

Gegenstand der Erfindung ist ein Verfahren zur Herstellung von Zinkoxidpartikeln ein Core-Shell-Partikel mit einem Kern und einer Schale erhältlich nach diesem Verfahren, die Verwendung des Core-Shell-Partikels in einem Verfahren zur Vulkanisierung von vulkanisierbaren Mischungen, eine vulkanisierbare Mischung mit einem Zinkoxid als Core-Shell-Partikel, sowie ein vulkanisierter Artikel erhältlich durch Vulkanisation aus dieser vulkanisierbaren Mischung.

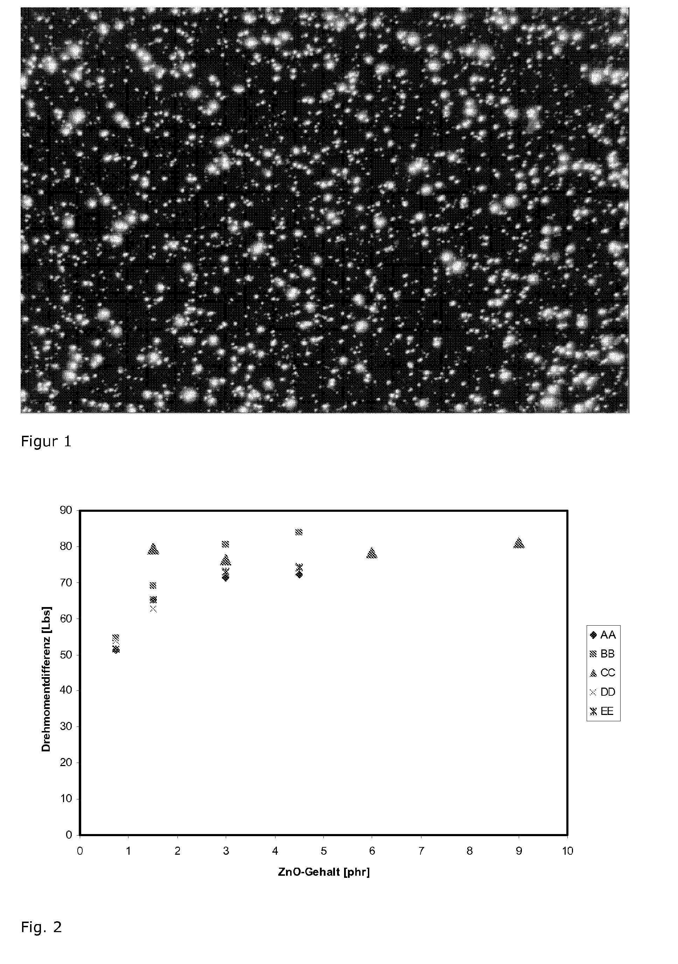

Als Vulkanisation wird allgemein ein Verfahren zur Überführung von plastischen, kautschukartigen, ungesättigten oder gesättigten Polymeren in den gummielastischen Zustand durch Vernetzung mit Hilfe von Zinkoxidpartikeln (siehe auch Römpp-Lexikon Chemie, 10. Auflage) verstanden. Bei der Vulkanisation werden Zinkoxid bzw. Zinkoxidpartikel als Aktivator eingesetzt, welche eine wichtige Komponente für die Vernetzungsreaktion der reaktiven Komponenten, in der zu vulkanisierenden Mischung, darstellen. Die Zinkoxidpartikel sollen in einer solchen Menge vorhanden sein, dass ein Maximum der Vernetzungsdichte erzielt werden kann. Üblicherweise reagiert aber nur ein Bruchteil des Zinkoxids bei der Vulkanisation ab, sodass ein großer Teil unverbraucht (Fig. 1.) im vulkanisierten Material verbleibt.

Figur 1 stellt einen Dünnschnitt eines in Gegenwart von Zinkoxid vulkanisierten Gegenstands dar. Jeder helle Punkt ist ein Zinkoxidpartikel. Dabei enthalten die Zinkoxidpartikel im Kern unverbrauchtes Zinkoxid, welches nicht an der Vulkanisationsreaktion teilgenommen hatte.

Dies ist unerwünscht. Neben der ökonomisch ungünstigen Seite des an sich nicht notwendigen Zinkoxidverbrauchs, ist auch eine ökologische Seite zu betrachten. Zink ist ein Schwermetall, dessen Eintrag in die Umwelt so gering wie möglich gehalten werden muss. Durch Reifenabrieb und -entsorgung gelangen aber nicht unbeträchtliche Mengen in die Umwelt.

Um den Zinkoxidverbrauch zu reduzieren, wurden Zusammensetzungen wie in US-A-4 207 377 und in US-A-4 331 706 offenbart entwickelt. Diese Zusammensetzungen enthalten einen inerten, also chemisch nicht reaktiven Kieselgelkern und eine Zinkoxidschale, welche an der Vulkanisationsreaktion teilnimmt. Beide Druckschriften offenbaren ferner Herstellungsverfahren der Zusammensetzungen. Dabei wird als Edukt jedoch Zinkammoniumcarbonat eingesetzt, welches sich als Zinkcarbonat auf die Oberfläche des Kieselgels absetzt und in einer folgenden Sinterung bei 800°C Kohlendioxid freisetzt. Diese Sinterung verursacht einen großen Energieverbrauch, welcher einen wesentlichen Nachteil dieser Herstellungsverfahren darstellt. Ferner zeigen die Zusammensetzungen keine höhere Vernetzungsdichte des vulkanisierten Produktes. Dies offenbart etwa das Beispiel 10 beider Druckschriften, wobei die Vernetzungsdichte der Proben AA und BB mit der Vernetzungsdichte der Probe CC verglichen wurde. Figur 2 veranschaulicht diese Verhältnisse. Diese Zusammensetzungen bei der Vulkanisation von Polymeren führen nicht zu einer erhöhten Vernetzung oder bei Reduktion der eingesetzten Menge an Zinkoxidpartikeln als Aktivator nicht zu einem konstanten Vernetzungsgrad im Vergleich zu herkömmlichem ZnO.

Daher ist ein der Erfindung zugrunde liegendes Problem darin zu sehen, ein Verfahren anzugeben mit dem es gelingt, die angesprochenen Nachteile zu vermeiden oder zumindest abzuschwächen. Gleichermaßen ist es wünschenswert einen Vulkanisationsaktivator bereitzustellen, welcher mit einer vergleichsweise geringeren Belastung für die Umwelt, zu einer mit dem Stand der Technik mindestens vergleichbaren Vernetzung einer vulkanisierbaren Mischung führt.

Überraschenderweise werden die angesprochenen technischen Probleme gelöst durch ein Verfahren zur Herstellung von Zinkoxidpartikeln, wobei das Zinkoxid in partikulärer Form als sogenannter Core-Shell-Partikel vorliegt, umfassend folgende Schritte:
- Zugabe eines Füllstoffes, eines alkalischen Feststoffes und/oder einer alkalischen Lösung und eines Zinksalzes oder einer Lösung eines Zinksalzes zu einem Lösungsmittel, insbesondere einem protisch polaren Lösungsmittel, wobei die Reihenfolge der Zugabe variabel ist;
- Abtrennung des entstehenden Niederschlages, ggf. Waschen des Niederschlages, insbesondere mit einem protisch polarem Lösungsmittel, vorzugsweise Wasser;
- Trocknen des Niederschlages bei einer Temperatur von 60°C bis 300°C, 60°C bis 250°C, 60°C bis 180°C oder 80°C bis 150°C oder 100 °C bis 120°C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

Die Trockung kann unter vermindertem Druck erfolgen. Dabei kann der Druck auf weniger als 1000, 900 oder 800 mbar verringert werden. Zum Beispiel kann der Druck zwischen 200 und 1000, 250 und 1000, 300 und 900, 350 und 900, 450 und 800, 500 und 750 oder 600 und 700 mbar liegen.

Ein weiterer Gegenstand der Erfindung ist ein Verfahren zur Vulkanisierung von vulkanisierbaren Mischungen in Gegenwart von Zinkoxid in den vulkanisierbaren Mischungen, wobei das Zinkoxid in partikulärer Form als sogenannter Core-Shell-Partikel vorliegt, wobei der Core-Shell-Partikel erhältlich ist durch
- Zugabe eines inerten Füllstoffes, eines alkalischen Feststoffes und/oder einer alkalischen Lösung und eines Zinksalzes oder einer Lösung eines Zinksalzes zu einem protisch polarem Lösungsmittel;
- Abtrennung des entstehenden Niederschlages, ggf. Waschen des Niederschlages und

Trocknen des Niederschlages bei einer Temperatur von 60°C bis 180°C oder 80 °C bis 150°C oder 100 °C bis 120°C für mehr als 2 h, insbesondere für 5 bis 25 h oder 7 bis 17 h oder 8 bis 15 h. Die Trockung kann unter vermindertem Druck erfolgen. Dabei kann der Druck auf weniger als 1000, 900 oder 800 mbar verringert werden. Zum Beispiel kann der Druck zwischen 200 und 1000, 250 und 1000, 300 und 900, 350 und 900, 450 und 800, 500 und 750 oder 600 und 700 mbar liegen.

Gegebenenfalls kann es sich empfehlen, dass das Zinksalz kein Carbonat umfasst.

Der durch das angegebene und im weiteren Verlauf der vorliegenden Offenbarung näher beschriebene Verfahren herstellbare Core-Shell-Partikel mit im wesentlichen Zinkoxid enthaltenden Schale liegt üblicherweise in Mengen vor, die den gewünschten Vernetzungsgrad in der vulkanisierten Mischung erzielen und wird nach oben begrenzt durch eine Menge, die zu unerwünschten Begleiterscheinungen führt, oder durch ökonomische Grenzen. Für bestimmte Produkte, z.B. Reifen für Fahrzeuge wie Automobile, Spezialfahrzeuge aber auch Flugzeuge, werden Vernetzungsdichten angestrebt, die mit den im erfindungsgemäßen Verfahren einzusetzenden erfindungsgemäßen Core-Shell-Partikeln typischerweise in Mengen von 0,5 bis 5,0 phr oder 0,5 bis 3,5 phr in der vulkanisierbaren Mischung erreicht werden. Die Angabe phr bedeutet "parts per hundred" und ist dem Fachmann verständlich. Die einzusetzenden Mengen können je nach Einsatzgebiet und wie vom Fachmann erkennbar in Bereichen von 0,1 bis 20 phr, insbesondere von 0,2 bis 18, 0,5 bis 16, 1 bis 14, 1 bis 10, 1 bis 8, 1 bis 6, 1 bis 4 oder 1,5 bis 3 phr liegen. Dabei sind die Bereiche als stetige Zahlenwertbereiche zu verstehen. Z. B. bedeutet 1,5 bis 3,5 phr einen Zahlenbereich von 1,5, 1,6 1,7, usw. bis 3,3, 3,4, 3,5.

Die vulkanisierbare Mischung enthält mindestens eine vulkanisierbare Komponente, die ausgewählt ist aus der Gruppe bestehend aus Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM), wobei die Anwendbarkeit des erfindungsgemäßen Verfahrens nicht auf diese Auswahl beschränkt ist. Es können auch Kombinationen der in der Gruppe aufgezählten Komponenten eingesetzt werden, und zwar in allen Permutationen.

Weitere Additive können zu der vulkanisierbaren Mischung zugegeben werden. Zu nennen sind insbesondere aktive Füllstoffe wie Ruße und/oder Kieselsäure zur Verbesserung der mechanischen Eigenschaften, sowie zur Verbesserung der Verarbeitbarkeit und zur Anbindung der Kieselsäure und anderer ggf. vorhandener polarer Füllstoffe an den Dienkautschuk können Silan-Kupplungsagenzien eingesetzt werden (z.B. TESPT). Ferner kann die Kautschukmischung noch andere halbaktive und inaktive Füllstoffe wie zum Beispiel Aluminiumhydroxid, Aluminiumsilikate, Aluminiumsulfat, Natrium-Aluminiumsilikat, Bariumsulfat, Calciumcarbonat, Calciumsilikat, Magnesiumsulfat, Magnesiumcarbonat, Magnesiumsilikat, Titandioxid, Glimmer, Kaoline, Kreide, Kieselerde, Kieselkreide, Schichtsilikate, Schiefermehl, Schwerspat, Talkum oder weitere halbaktive oder inaktive Füllstoffe in beliebiger Kombination enthalten. Die Kautschukmischung kann Weichmacher enthalten. Die Kautschukmischung kann Alterungsschutzmittel enthalten. Die Kautschukmischung enthält Beschleuniger und/oder Beschleunigerkombinationen. Die Kautschukmischung kann Vulkanisationsverzögerer enthalten. Die Kautschukmischung kann Verarbeitungshilfsmittel enthalten.

Die Vulkanisation wird in Anwesenheit von Schwefel und/oder Schwefelspendern durchgeführt, wobei Schwefelspender als Vulkanisationsbeschleuniger wirken können.

Gegenstand der Erfindung ist auch eine vulkanisierbare Mischung mit einem Zinkoxid als Core-Shell-Partikel und mindestens einer vulkanisierbaren Komponente, wobei der Core-Shell-Partikeln erhältlich ist durch
- Zugabe eines inerten Füllstoffes, eines alkalischen Feststoffes und/oder einer alkalischen Lösung und eines Zinksalzes oder einer Lösung eines Zinksalzes zu einem protisch polarem Lösungsmittel
- Abtrennung des entstehenden Niederschlages, ggf. Waschen des Niederschlages und
- Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h. Die Trockung kann unter vermindertem Druck erfolgen. Dabei kann der Druck auf weniger als 1000, 900 oder 800 mbar verringert werden. Zum Beispiel kann der Druck zwischen 200 und 1000, 250 und 1000, 300 und 900, 350 und 900, 450 und 800, 500 und 750 oder 600 und 700 mbar liegen.

In einer Ausführungsform der vulkanisierbare Mischung gemäß der Erfindung enthält die vulkanisierbare Mischung 0,5 bis 5,0 phr oder 0,5 bis 3,5 phr Zinkoxid als Core-Shell-Partikel.

Die erfindungsgemäße vulkanisierbare Mischung kann als vulkanisierbare Komponenten solche enthalten, die ausgewählt sind aus der Gruppe bestehend aus Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM). Der Fachmann ist selbstverständlich auf diese beispielhafte Auswahl nicht beschränkt. Es können auch Kombinationen der in der Gruppe aufgezählten Komponenten eingesetzt werden, und zwar in allen Permutationen.

Ein mittels der erfindungsgemäßen Vulkanisation aus einer erfindungsgemäßen vulkanisierbaren Mischung herstellbarer, dass heißt erhältlicher vulkanisierter Artikel ist weiterhin Gegenstand der vorliegenden Erfindung.

Der durch das erfindungsgemäße Verfahren herstellbare, d. h. erhältliche vulkanisierte Artikel weist insbesondere einen Vernetzungsgrad auf, der mit einer Zinkoxidmenge von nur 65 % bis 85 % derjenigen der bisher bekannten Zinkoxide erhältlich ist.

Ein weiterer einheitlicher Gegenstand der vorliegenden Erfindung ist ein Core-Shell-Partikel mit einem Kern und einer Schale, wobei der Kern im wesentlichen mindestens ein inertes anorganisches Material und die Schale im wesentlichen Zinkoxid aufweist und erhältlich ist durch ein Verfahren umfassend die folgenden Schritte (es sei daraufhingewiesen, dass der Begriff "umfassend" auch "bestehend aus" meint):
- Zugabe eines inerten Füllstoffes, eines alkalischen Feststoffes und/oder einer alkalischen Lösung und eines Zinksalzes oder einer Lösung eines Zinksalzes zu einem protisch polarem Lösungsmittel;
- Abtrennung des entstehenden Niederschlages, ggf. Waschen des Niederschlages und
- Trocknen des Niederschlages bei einer Temperatur von 60°C bis 300°C, 60 °C bis 250°C, 60°C bis 180°C oder 80°C bis 150°C oder 100 °C bis 120°C für mehr als ungefähr 2 h, insbesondere für 5 bis 25 h oder 7 bis 17 h oder 8 bis 15 h. Die genannten Bereiche verstehen sich für den Fachmann als kontinuierliche Bereiche. Wie in der Naturwissenschaft und im Ingenieurwesen üblich, wird beispielsweise unter einem Temperaturbereich von 110°C bis 120 °C folgendes verstanden:
   110°C, 111°C, 112°C, 113°C, 114°C, 115°C, 116°C, 117°C, 118°C, 119°C, 120 °C.

Die Trockung kann unter vermindertem Druck erfolgen. Dabei kann der Druck auf weniger als 1000, 900 oder 800 mbar verringert werden. Zum Beispiel kann der Druck zwischen 200 und 1000, 250 und 1000, 300 und 900, 350 und 900, 450 und 800, 500 und 750 oder 600 und 700 mbar liegen, wobei die Druckbereiche als kontinuierliche Bereiche verstanden werden. So besteht der Bereich von 600 bis 700 aus allen natürlichen Zahlen von 600, 601, 602 bis 700.

Ferner soll ein Stoff als inert gelten, welcher bei chemischen Reaktionen inaktiv und daher reaktionsunfähig ist.

Die erfindungsgemäßen Core-Shell-Zinkoxidpartikel führen überraschenderweise bei gleicher Konzentration im Vergleich zu herkömmlichem ZnO nicht nur zu einer höheren Vernetzungsdichte des vulkanisierten Produktes, es lassen sich sogar insgesamt bis zu 15% höhere Vernetzungsdichten erzielen Das erfindungsgemäße Verfahren zur Herstellung von erfindungsgemäßen Core-Shell-Zinkoxidpartikeln umfasst oder besteht aus folgende(n) Schritte(n):
- Zugabe eines inerten Füllstoffes, eines alkalischen Feststoffes, und/oder einer alkalischen Lösung und eines Zinksalzes, es mag das Carbonat Zinksalz ausgenommen sein, oder einer Lösung eines Zinksalzes zu einem protisch polarem Lösungsmittel;
- Abtrennung des entstehenden Niederschlages, ggf. Waschen des Niederschlages, insbesondere mit dem protisch polarem Lösungsmittel;
- Trocknen des Niederschlages bei einer Temperatur von 60°C bis 300°C, 60 °C bis 250°C, 60°C bis 180°C oder 80°C bis 150°C oder 100 °C bis 120°C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

Unter einem protischen Lösungsmittel wird ein Lösungsmittel, welches Protonen enthält und/oder freisetzt, wie z. B. Wasser, Methanol, Ethanol, 2-Propanon, 1-Propanol, 2-Propanol, N-Butanol, iso-Butanol, 2-Butanol, tert-Butanol, verdünnte organische oder anorganische Säuren, wie zum Beispiel Essigsäure, Ameisensäure, Salzsäure, Salpetersäure, Schwefelsäure etc. verstanden. Die bevorzugte Bezeichnung der IUPAC lautet protogene Lösungsmittel. Ferner wird als polares Lösungsmittel ein Lösungsmittel bezeichnet, welches funktionelle Gruppen umfasst, die als polare Gruppen durch ihre charakteristische Elektronenverteilung dem Lösungsmittel ein elektrisches Dipolmoment verleihen.

Typischerweise kann das Zinksalz ausgewählt sein aus der Gruppe bestehend aus Zinkhalogenid, Zinksulfat, Zinknitrat, Zinkphosphat etc. oder Zink-organische Verbindungen, wie Zinkformiat, Zinkacetat, Zinkacetatdihydrat, Zinkpropionat, Zinkstearat etc. Es können auch Kombinationen der in der Gruppe aufgezählten Komponenten eingesetzt werden, und zwar in allen Permutationen. Es kann auch Zinkoxid und/oder Zinkhydroxid eingesetzt werden.

Erfindungsgemäß erfolgt die Abtrennung des Niederschlages z. B. durch Filtration, Dekantieren, Zentrifugation, Abnutschen etc. Der Niederschlag kann zur Erhöhung der Reinheit gewaschen werden. In noch einer Ausgestaltung des erfindungsgemäßen Verfahrens wird der Niederschlag mit dem protisch polarem Lösungsmittel gewaschen.

Das protisch polare Lösungsmittel kann in einer Ausführungsform des erfindungsgemäßen Verfahrens auf eine Temperatur von 10 bis 90 °C, insbesondere von 30 bis 70 °C oder 40 bis 60 °C erwärmt werden, wobei die Temperaturbereiche als kontinuierliche Bereiche verstanden werden.

In einer weiteren Ausführungsform des erfindungsgemäßen Verfahrens wird die Temperatur unterhalb von 300 °C gehalten.

Erfindungsgemäß werden als bekannte Zinkoxidpartikel Zinkoxidpartikel ohne inerten Füllstoff, z. B. Zinkoxid Rotsiegel, ein aus metallischem Zink nach dem indirekten Herstellungsverfahren hergestelltes, chemisch reines Zinkoxid, oder Probe CC gemäß den o. g. Druckschriften und ferner die Zusammensetzungen gemäß den o. g. Druckschriften verstanden, insbesondere die Proben AA und BB. Unter Vernetzung wird die Ausbildung von Atombindungen zwischen Polymeren bezeichnet. Die Vernetzungsdichte beschreibt den Grad der Vernetzung, d. h. die Anzahl der Vernetzungsstellen pro Mol der vulkanisierbaren Polymere. Eine höhere Vernetzung fördert bekannterweise die elastischen Eigenschaften des vulkanisierten Polymers wohingegen eine geringere Vernetzungsdichte eher die viskosen Eigenschaften hervorhebt.

In einer Ausführungsform der Erfindung führen die Core-Shell-Zinkoxidpartikel bei einer Vulkanisation zu einer um 15% erhöhten Vernetzungsdichte gegenüber reinem Zinkoxid.

Die erfindungsgemäßen Zinkoxidpartikel werden bei der Vulkanisation von vulkanisierbaren Mischungen, insbesondere von Kautschukmischungen, z. B. bei der Herstellung von Reifen für die Fahrzeugindustrie, Förderbändern, Dichtungen, Keilriemen, Gummibändern, Kabelisolierungen, Kabelummantelungen, etc. eingesetzt.

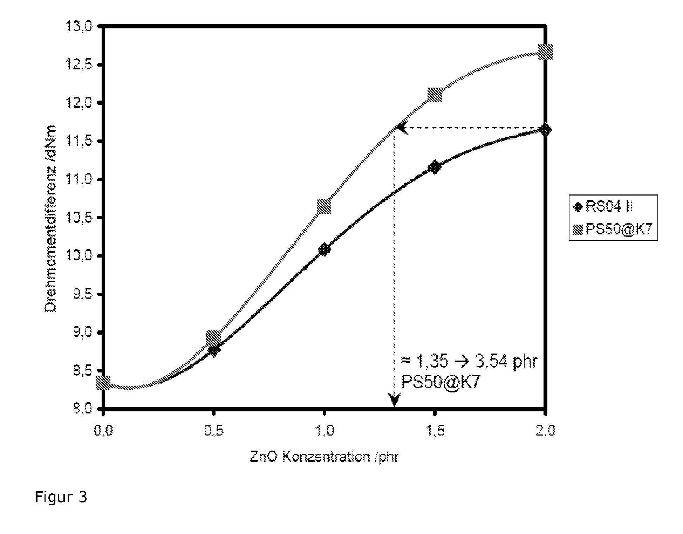

Das erfindungsgemäße Herstellungsverfahren führt überraschenderweise zu Zinkoxidpartikeln, welche im Vergleich zu herkömmlichen Zinkoxidpartikel mit oder ohne Kieselgelkern bei einer Vulkanisation zu einer höheren Vernetzungsdichte führen. Dies zeigt sich insbesondere bei einer Konzentration von 1-2 phr (parts per hundred) ZnO (siehe Figur.3). Dieser Vorteil der erfindungsgemäßen Partikel stellt sich ein, wenn auf eine Erwärmung über 200 oder 400 oder 750 oder 800 °C, also insbesondere auf eine Sinterung des Niederschlages verzichtet wird. Die Zugabe von Zinksalzen, die kein Carbonat umfassen, verhindert auch die Freisetzung von Kohlendioxid im Rahmen des erfindungsgemäßen Verfahrens.

In einer Ausgestaltung des erfindungsgemäßen Verfahrens weist das Verfahren folgende Schritte auf:
- Zugabe eines Füllstoffes, insbesondere Ton, Talk, Calciumcarbonat, Siliziumdioxid, Aluminiumhydroxid, Aluminiumsilikate, Aluminiumsulfat, Natrium-Aluminiumsilikat, Bariumsulfat, Calciumsilikat, Magnesiumsulfat, Magnesiumcarbonat, Magnesiumsilikat, Titandioxid, Glimmer, Kaoline, Kreide, Kieselerde, Kieselkreide, Ruß, Schichtsilikate, Schiefermehl, Schwerspat, eines alkalischen Feststoffes, insbesondere Natriumhydroxid, Kaliumhydroxid oder Calciumhydroxid und/oder einer alkalischen Lösung und eines Zinksalzes oder einer Lösung eines Zinksalzes, wobei das Zinksalz ausgewählt ist aus der Gruppe bestehend aus Zinkhalogenid, Zinksulfat, Zinknitrat, Zinkphosphat oder Zink-organische Verbindungen, wie Zinkformiat, Zinkacetat, Zinkacetatdihydrat, Zinkpropionat, Zinkstearat oder Mischungen davon, zu einem Lösungsmittel, insbesondere einem protisch polaren Lösungsmittel wie zum Beispiel Wasser, Methanol, Ethanol, 2-Propanon, 1-Propanol, 2-Propanol, *n*-Butanol, *iso*-Butanol, 2-Butanol, *tert*-Butanol, verdünnte organische oder anorganische Säuren, wie Essigsäure, Ameisensäure, Salzsäure, Salpetersäure, Schwefelsäure,oder eine Mischung davon;
- Abtrennung des entstehenden Niederschlages, ggf. Waschen des Niederschlages, insbesondere mit einem protisch polarem Lösungsmittel, vorzugsweise Wasser;

Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.In einer weiteren Ausführungsform umfasst oder besteht das erfindungsgemäße Verfahren aus folgende(n) Schritte(n):
- Zugabe eines alkalischen Feststoffes insbesondere Natriumhydroxid, Kaliumhydroxid oder Calciumhydroxid und/oder einer alkalischen Lösung in einem protisch polaren Lösungsmittel, insbesondere Wasser, Methanol, Ethanol, 2-Propanon, 1-Propanol, 2-Propanol, N-Butanol, iso-Butanol, 2-Butanol, tert-Butanol, verdünnte organische oder anorganische Säuren, wie zum Beispiel Essigsäure, Ameisensäure, Salzsäure, Salpetersäure, Schwefelsäure, zu einem Gemisch aus einem Füllstoff, insbesondere Ton, Talk, Calciumcarbonat, Siliziumdioxid, Aluminiumhydroxid, Aluminiumsilikate, Aluminiumsulfat, Natrium-Aluminiumsilikat, Bariumsulfat, Calciumsilikat, Magnesiumsulfat, Magnesiumcarbonat, Magnesiumsilikat, Titandioxid, Glimmer, Kaoline, Kreide, Kieselerde, Kieselkreide, Ruß, Schichtsilikate, Schiefermehl, Schwerspat, mit einem Zinksalz oder einer Lösung eines Zinksalzes, wobei das Zinksalz ausgewählt ist aus der Gruppe bestehend aus Zinkhalogenid, Zinksulfat, Zinknitrat, Zinkphosphat oder Zink-organische Verbindungen, wie Zinkformiat, Zinkacetat, Zinkacetatdihydrat, Zinkpropionat, Zinkstearat oder Mischungen davon in einem protisch polaren Lösungsmittel,insbesondere dem Lösungsmittel der alkalischen Lösung;
- Abtrennung des entstehenden Niederschlages, ggf. Waschen des Niederschlages, insbesondere mit dem protisch polaren Lösungsmittel;
- Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

In einer zusätzlichen Ausführungsform umfasst oder besteht das erfindungsgemäße Verfahren aus folgende(n) Schritte(n):
- Zugabe einer organischen oder anorganischen Säure, insbesondere Essigsäure, Ameisensäure, Salzsäure, Salpetersäure, Schwefelsäure oder einer Mischung davon zu einem Gemisch aus einem inerten Füllstoff, insbesondere Ton, Talk, Calciumcarbonat, Siliziumdioxid, Aluminiumhydroxid, Aluminiumsilikate, Aluminiumsulfat, Natrium-Aluminiumsilikat, Bariumsulfat, Calciumsilikat, Magnesiumsulfat, Magnesiumcarbonat, Magnesiumsilikat, Titandioxid, Glimmer, Kaoline, Kreide, Kieselerde, Kieselkreide, Ruß, Schichtsilikate, Schiefermehl, Schwerspat, einem alkalischen Feststoff, insbesondere Natriumhydroxid, Kaliumhydroxid oder Calciumhydroxid und/oder einer alkalischen Lösung und einer Lösung eines Zinksalzes, insbesondere Zinkhalogenid, Zinksulfat, Zinknitrat, Zinkphosphat oder Zinkorganische Verbindungen, wie Zinkformiat, Zinkacetat, Zinkacetatdihydrat, Zinkpropionat, Zinkstearat oder Zinkoxid oder Zinkhydroxid, oder Mischungen davon, in einem protisch polaren Lösungsmittel, insbesondere Wasser, Methanol, Ethanol, 2-Propanon, 1-Propanol, 2-Propanol, *n*-Butanol, *iso*-Butanol, 2-Butanol, *tert-*Butanol.
- Abtrennung des entstehenden Niederschlages, ggf. Waschen des Niederschlages, insbesondere mit dem protisch polaren Lösungsmittel;
- Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

In einer Ausführungsform des erfindungsgemäßen Verfahrens wird das protisch polare Lösungsmittel vor, während und/oder nach Zugabe der Edukte auf eine Temperatur von 10 bis 90 °C, insbesondere von 30 bis 70 °C oder 35 bis 65 °C oder 40 bis 60 °C erwärmt.

In einer anderen Ausführungsform des erfindungsgemäßen Verfahrens besteht das Verfahren aus den Schritten gemäß Anspruch 1.

In noch einer Ausführungsform des erfindungsgemäßen Verfahrens wird als protisch polares Lösungsmittel Wasser, Methanol, Ethanol, 2-Propanon, 1-Propanol, 2-Propanol oder N-Butanol, iso-Butanol, 2-Butanol, tert-Butanol, oder eine Mischung davon eingesetzt.

In einer weiteren Ausführungsform des erfindungsgemäßen Verfahrens wird als Füllstoff ein inerter Füllstoff verwendet, insbesondere Ton, Talk, Calciumcarbonat, Siliziumdioxid, Aluminiumhydroxid, Aluminiumsilikate, Aluminiumsulfat, Natrium-Aluminiumsilikat, Bariumsulfat, Calciumsilikat, Magnesiumsulfat, Magnesiumcarbonat, Magnesiumsilikat, Titandioxid, Glimmer, Kaoline, Kreide, Kieselerde, Kieselkreide, Ruß, Schichtsilikate, Schiefermehl, Schwerspat, oder Mischungen davon.

In einer zusätzlichen Ausführungsform des erfindungsgemäßen Verfahrens umfasst der alkalische Feststoff Natriumhydroxid, Kaliumhydroxid oder Calciumhydroxid.

In noch einer weiteren Ausführungsform des erfindungsgemäßen Verfahrens umfasst das Verfahren keinen Erwärmungsschritt auf mehr als 300 °C, insbesondere mehr als 400 oder 500 oder 750 °C. Insbesondere wird die Temperaturführung unterhalb von 300 °C gehalten. Folglich umfasst das Verfahren keine Sinterung. Der Verzicht auf eine Sinterung ermöglicht ferner eine deutliche Energieeinsparung gegenüber den bekannten Herstellungsverfahren.

In einer Ausführungsform des erfindungsgemäßen Verfahrens ist die zu vulkanisierende Mischung ein Dien-Kautschuk.

Verwendung finden z. B. Dien-Kautschuke ausgewählt aus der Gruppe Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM).

Ein weiterer Gegenstand der Erfindung sind Zinkoxidpartikel mit einem inerten Füllstoff als Kern, welche gemäß dem erfindungsgemäßen Verfahren erhältlich sind.

In einer Ausführungsform umfassen die erfindungsgemäßen Zinkoxidpartikel Zinkoxid in einem Bereich von 5 bis 95 oder 10 bis 90 oder 20 bis 80 oder 22 bis 70 oder 23 bis 60 oder 25 bis 50 oder 27 bis 45 oder 29 bis 40 oder 30 bis 39 Gew.-%. Ferner weisen die erfindungsgemäßen Zinkoxidpartikel eine Oberfläche BET von 2 bis 100, insbesondere von 5 bis 90, 8 bis 80, 10 bis 75, 20 bis 60, 30 bis 50 oder 35 bis 45 m²/g auf.

Die Vernetzungsdichte wurde mit Zinkoxidpartikeln verglichen, welche entweder keinen inerten Füllstoff umfassen, oder zumindest keine Erhöhung der Vernetzungsdichte gegenüber ZnO ohne Füllstoff zeigen. In den nachfolgenden Beispielen wurde die Vernetzungsdichte gegenüber einem bekannten Zinkoxid (RS04 II) bestimmt.

Ein weiterer Gegenstand der Erfindung ist die Verwendung des erfindungsgemäßen Core-Shell-Partikels 5 in einem Verfahren zur Vulkanisierung von vulkanisierbaren Mischungen. Dabei wird das Zinkoxid als Core-Shell-Partikel vorzugsweise in Mengen von 0,5 bis 5,0 phr oder 0,5 bis 3,5 phr, bezogen auf den Zinkoxidanteil in den Core-Shell-Partikeln, in den vulkanisierbaren Mischungen verwendet. Die vulkanisierbare Mischung enthält insbesondere mindestens eine vulkanisierbare Komponente, die ausgewählt ist aus der Gruppe bestehend aus Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM).

In einer Ausgestaltung werden der vulkanisierbaren Mischung weitere Additive zugesetzt, wobei die Additive ausgewählt sind aus der Gruppe bestehend aus halbaktiven und inaktiven Füllstoffen wie zum Beispiel Rußen, Kieselsäuren, Aluminiumhydroxid, Aluminiumsilikaten, Aluminiumsulfat, Natrium-Aluminiumsilikat, Bariumsulfat, Calciumcarbonat, Calciumsilikat, Magnesiumsulfat, Magnesiumcarbonat, Magnesiumsilikat, Titandioxid, Glimmer, Kaoline, Kreide, Kieselerde, Kieselkreide, Schichtsilikate, Schiefermehl, Schwerspat, Talkum, Weichmachern, Beschleunigern und/oder Beschleunigerkombinationen, Vulkanisationsverzögerern, Verarbeitungshilfsmitteln, Schwefel und/oder Schwefelspendern.

### Kurzbeschreibung der Figuren:

- Fig. 1:: Dünnschnitt eines Elastomers
- Fig. 2:: Vernetzungsdichte gemäß Stand der Technik
- Fig. 3:: Drehmomentdifferenz als Maß für die Vernetzungsdichte in Abhängigkeit der ZnO-Konzentration
- Fig. 4:: Drehmomentdifferenz als Maß der Vernetzungsdichte in Abhängigkeit der ZnO-Konzentration.
- Fig. 5:: Schematischer Aufbau eines Core-Shell-Partikels

### Beispiele:

In den nachfolgenden Versuchen wurden folgende Produkte getestet:
- PS50@K7 (ZnO-Gehalt: 38,11%, BET: 79,4 m²/g)
- Zn(OH)2@K7 (ZnO-Gehalt: 31,11%, BET: 10,1 m²/g)

Dabei ist BET die spezifische Oberfläche in m²/g. Diese Oberfläche wird gemessen nach DIN 66131 (Bestimmung der spezifischen Oberfläche von Feststoffen durch Gasadsorption nach Brunauer, Emmett und Teller) bzw. nach DIN 66132 (Bestimmung der spezifischen Oberfläche von Feststoffen durch Stickstoffadsorption - Einpunkt-Differenzverfahren nach Haul und Dümbgen).

### Beispiel 1:

**PS50@K7** (Zinkoxid mit Kieselgurkern)

### Synthesevorschrift von PS50@K7

In einem 1-1-Dreihalskolben werden 333,3 g Methanol, 15 g Kieselgur Typ K7 und 49,15 g Zinkacetat-Dihydrat erwärmt. Hat die Lösung eine Temperatur von 60 °C erreicht wird eine auf Raumtemperatur temperierte Lösung aus 25,15 g Kaliumhydroxid in 84 g Methanol unter Rühren über einen Tropftrichter zugegeben. Der dabei entstehende Feststoff setzt sich über Nacht ab. Der Überstand wird abgesaugt und durch 166,6 g VE-Wasser ersetzt. Nach 20-minütigem Rühren wird die Suspension filtriert und der Rückstand erneut mit 83,3 g VE-Wasser versetzt. Nach weiteren 30 Minuten Rührzeit wird die Lösung filtriert und mit VE-Wasser gewaschen.
Der Feststoff wird für 18 Stunden bei 130°C getrocknet. In einer Reihe wurde das Core Shell-Produkt PS50@K7 im Vergleich zu Zinkoxid RS04 II (ohne Füllstoffkern) näher untersucht.

### Drehmomentdifferenz

Die Fig. 3 offenbart Drehmomentdifferenzen als Maß für die Vernetzungsdichte in Abhängigkeit der ZnO-Konzentration. Die Drehmomentdifferenzen der Mischungen mit PS50@K7 als Aktivator liegen im Vergleich zu den Mischungen mit Zinkoxid Rotsiegel als Aktivator stets höher.

### Beispiel 2:

**Zn(OH)2@K7** (Zinkoxid mit Kieselgurkern)

### Synthesevorschrift von Zn(OH)₂@K7

In einem 600-ml-Becherglas werden 20 g Natriumhydroxid frisch in 300 ml VE-Wasser gelöst. Zu der noch warmen Lösung werden unter Rühren 15 g Kieselgur Typ K7 und anschließend tropfenweise eine ca. 10 %-ige Zinkchloridlösung zugegeben, bis die Lösung neutral reagiert. Der entstehende Niederschlag wird filtriert und mit VE-Wasser gewaschen. Der Feststoff wird für 8 Stunden bei 120 °C getrocknet.

### Drehmomentdifferenz

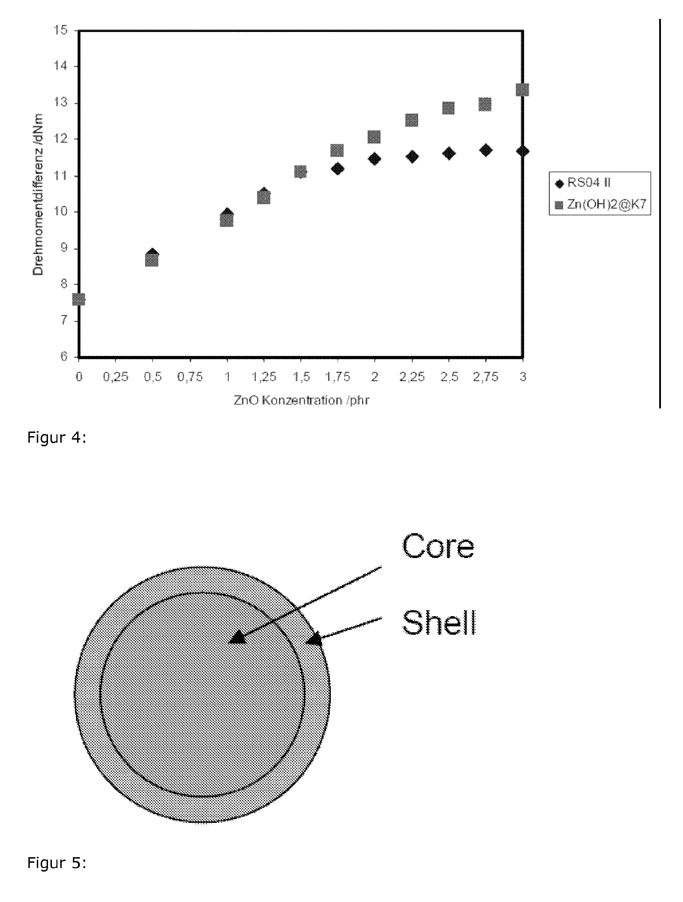

Fig. 4 offenbart, dass die Vernetzungsdichte der Mischungen mit Zn(OH)2@K7 als Aktivator ab einem ZnO-Gehalt von 1,75 phr die Vernetzungsdichte der Mischungen mit Zinkoxid Rotsiegel als Aktivator übersteigt.

Die Fig. 5 zeigt eine Ausgestaltung der erfindungsgemäßen Zinkoxidpartikel, sog. Core-Shell-Partikel.

### Beispiel 3:

**Zn(OH)2@K7** (Zinkoxid mit Kieselgurkern)

### Synthesevorschrift von Zn(OH)₂@K7

In 100 ml entionisiertes Wasser werden unter Rühren 50 g Natriumhydroxid eingetragen und vollständig aufgelöst. Unter Rühren und ggf. unter Erwärmen werden 13 g Zinkoxid zugegeben und ebenfalls gelöst. Nach Zugabe von 15g Kieselgur und 200 ml entionisiertem Wasser wird unter intensivem Rühren der pH-Wert mit halbkonzentrierter Schwefelsäure auf ca. 9 eingestellt. Der entstehende Niederschlag setzt sich über Nacht ab und wird filtriert, ggf. zentrifugiert und bei 120 °C getrocknet.
Zinkgehalt: 36,9 %
BET: 21,4 m²/g

## Patentansprüche

1. Verfahren zur Herstellung von Zinkoxidpartikeln, wobei das Zinkoxid in partikulärer Form als sogenannter Core-Shell-Partikel vorliegt, umfassend folgende Schritte:
• Zugabe eines Füllstoffes, eines alkalischen Feststoffes und/oder einer alkalischen Lösung und eines Zinksalzes oder einer Lösung eines Zinksalzes zu einem Lösungsmittel, insbesondere einem protisch polaren Lösungsmittel, wobei die Reihenfolge der Zugabe variabel ist;
• Abtrennung des entstehenden Niederschlages, ggf. Waschen des Niederschlages, insbesondere mit einem protisch polarem Lösungsmittel, vorzugsweise Wasser;
• Trocknen des Niederschlages bei einer Temperatur von 60 °C bis 300 °C, 60 °C bis 250 °C, 60 °C bis 180 °C oder 80 °C bis 150 °C oder 100 °C bis 120 °C für mehr als 2 h, insbesondere für 5 bis 25 h oder 7 bis 17 h oder 8 bis 15 h, insbesondere unter vermindertem Druck, z. B. bei weniger als 1000, 900 oder 800 mbar.

2. Verfahren gemäß Anspruch 1,
wobei als alkalischer Feststoff Natriumhydroxid, Kaliumhydroxid, Calciumhydroxid oder eine Mischung davon und/oder eine alkalische Lösung davon zugegeben wird;
und wobei das protisch polare Lösungsmittel Wasser, Methanol, Ethanol, 2-Propanon, 1-Propanol, 2-Propanol, N-Butanol, iso-Butanol, 2-Butanol, tert-Butanol, verdünnte organische oder anorganische Säuren, wie zum Beispiel Essigsäure, Ameisensäure, Salzsäure, Salpetersäure, Schwefelsäure umfasst oder daraus besteht.

3. Verfahren gemäß mindestens einem der Ansprüche 1 oder 2,
wobei als Füllstoff ein inerter Füllstoff verwendet wird, insbesondere Ton, Talk, Calciumcarbonat, Siliziumdioxid, Aluminiumhydroxid, Aluminiumsilikate, Aluminiumsulfat, Natrium-Aluminiumsilikat, Bariumsulfat, Calciumsilikat, Magnesiumsulfat, Magnesiumcarbonat, Magnesiumsilikat, Titandioxid, Glimmer, Kaoline, Kreide, Kieselerde, Kieselkreide, Ruß, Schichtsilikate, Schiefermehl, Schwerspat, oder Mischungen davon,
und als Zinksalz Zinkhalogenid, Zinksulfat, Zinknitrat, Zinkphosphat oder eine Zinkorganische Verbindungen oder Mischungen davon, oder eine Lösung eines Zinksalzes in einem protisch polaren Lösungsmittel eingesetzt werden.

4. Verfahren gemäß mindestens einem der Ansprüche 1-3, wobei das protisch polare Lösungsmittel auf eine Temperatur von 10 bis 90 °C, insbesondere von 30 bis 70 °C oder 40 bis 60 °C erwärmt wird.

5. Core-Shell-Partikel mit einem Kern und einer Schale, wobei der Kern im wesentlichen mindestens ein inertes anorganisches Material und die Schale im wesentlichen Zinkoxid aufweist und erhältlich ist durch das Verfahren gemäß mindestens eines der Ansprüche 1-4.

6. Verwendung des Core-Shell-Partikels gemäß Anspruch 5 in einem Verfahren zur Vulkanisierung von vulkanisierbaren Mischungen.

7. Verwendung nach Anspruch 6, wobei das Zinkoxid als Core-Shell-Partikel in Mengen von 0,5 bis 5,0 phr, bezogen auf den Zinkoxidanteil in den Core-Shell-Partikeln, in den vulkanisierbaren Mischungen vorhanden ist.

8. Verwendung nach Anspruch 6 oder 7, wobei die vulkanisierbare Mischung mindestens eine vulkanisierbare Komponente enthält, die ausgewählt ist aus der Gruppe bestehend aus Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM).

9. Verwendung nach mindestens einem der Ansprüche 6-8, wobei weitere Additive in die vulkanisierbare Mischung zugegeben werden.

10. Verwendung nach Anspruch 9, wobei die Additive ausgewählt sind aus der Gruppe bestehend aus halbaktiven und inaktiven Füllstoffen wie zum Beispiel Rußen, Kieselsäuren, Aluminiumhydroxid, Aluminiumsilikaten, Aluminiumsulfat, Natrium-Aluminiumsilikat, Bariumsulfat, Calciumcarbonat, Calciumsilikat, Magnesiumsulfat, Magnesiumcarbonat, Magnesiumsilikat, Titandioxid, Glimmer, Kaoline, Kreide, Kieselerde, Kieselkreide, Schichtsilikate, Schiefermehl, Schwerspat, Talkum, Weichmachern, Beschleunigern und/oder Beschleunigerkombinationen, Vulkanisationsverzögerern, Verarbeitungshilfsmitteln, Schwefel und/oder Schwefelspendern.

11. Vulkanisierbare Mischung mit einem Zinkoxid als Core-Shell-Partikel, der erhältlich ist durch das Verfahren gemäß mindestens eines der Ansprüche 1-4 und mindestens einer vulkanisierbare Komponente und gegebenenfalls mindestens einem Additiv gemäß den Ansprüchen 9 und/oder 10.

12. Vulkanisierbare Mischung nach Anspruch 11, wobei die vulkanisierbare Mischung 0,5 bis 5,0 phr Zinkoxid als Core-Shell-Partikel enthält.

13. Vulkanisierbare Mischung nach Anspruch 11 oder 12, wobei die vulkanisierbare Mischung mindestens eine vulkanisierbare Komponente enthält, die aus der Gruppe bestehend aus Naturkautschuk (NR), Polybutadienkautschuk (BR), Polyisoprenkautschuk (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Ethylen-Propylen-Kautschuk (EPDM) ausgewählte Komponenten ausgewählt ist.

14. Vulkanisierter Artikel erhältlich durch Vulkanisation aus einer vulkanisierbaren Mischung gemäß mindestens einem der Ansprüche 11 bis 13.

15. Vulkanisierter Artikel gemäß Anspruch 14, der einen Vernetzungsgrad in der vulkanisierten Mischung aufweist, der mit einer Zinkoxidmenge, vorliegend als Core-Shell-Partikel, von nur 65 % bis 85 % desjenigen Vernetzungsgrades, der mit Zinkoxid, welches nicht als Core-Shell-Partikel vorliegt, einstellbar ist.
